# EUROPÄISCHE PATENTANMELDUNG

(11) **EP 4 553 797 A1**
(43) Veröffentlichungstag der Anmeldung: **14.05.2025**
(21) Anmeldenummer: 24206474.9
(22) Anmeldetag: 14.10.2024
(51) Int. Cl.: G07C 9/20, G07C 9/37, G07C 9/00

(54) **ZUTRITTSKONTROLLSYSTEM SOWIE VERFAHREN ZU EINEM BETRIEB DES ZUTRITTSKONTROLLSYSTEMS**

(30) Priorität: 13.11.2023 DE 102023131504
(71) Anmelder: Quantus Informatics AG, 78333 Stockach (DE)
(72) Erfinder: Roth, Daniela, 88662 Überlingen (DE)
(74) Vertreter: Daub, Thomas

(57) **Zusammenfassung**

Die Erfindung geht aus von einem Zutrittskontrollsystem mit zumindest einer Recheneinheit (12) zu einer elektronischen Datenverarbeitung, mit zumindest einer akustischen Ausgabeeinheit (14) und mit zumindest einer Steuer- und/oder Kommunikationsschnittstelleneinheit (16), über die die Ausgabeeinheit (14) mit der Recheneinheit (12) verbindbar ist, insbesondere verbunden ist.

Es wird vorgeschlagen, dass die Recheneinheit (12) dazu eingerichtet ist, in Abhängigkeit von einer Authentifizierung einer Person eine situationsspezifische Information, insbesondere Anweisung, als Sprachausgabe mittels zumindest eines über die Steuer- und/oder Kommunikationsschnittstelleneinheit (16) verbundenen oder verbindbaren Lautsprechers (32), insbesondere der Ausgabeeinheit (14), auszugeben.

## Beschreibung

### Stand der Technik

Die Erfindung betrifft ein Zutrittskontrollsystem nach dem Oberbegriff des Anspruchs 1 sowie ein Verfahren zu einem Betrieb des Zutrittskontrollsystems nach dem Oberbegriff des Anspruchs 6.

Es sind bereits Zutrittskontrollsysteme sowie Verfahren zu einem Betrieb von Zutrittskontrollsystemen bekannt, wobei die bekannten Zutrittskontrollsysteme zumindest eine Recheneinheit zu einer elektronischen Datenverarbeitung, zumindest eine akustische Ausgabeeinheit, die einen Summer aufweist oder als Summer ausgebildet ist, und zumindest eine Steuer- und/oder Kommunikationsschnittstelleneinheit, über die die Ausgabeeinheit mit der Recheneinheit verbunden ist, umfassen.

Die Aufgabe der Erfindung besteht insbesondere darin, ein gattungsgemäßes Zutrittskontrollsystem bzw. ein Verfahren zu einem Betrieb des gattungsgemäßen Zutrittskontrollsystems mit einem hohen Komfort, mit einer großen Flexibilität sowie mit einer kompakten Bauform bereitzustellen. Die Aufgabe wird erfindungsgemäß durch die Merkmale des Anspruchs 1 bzw. des Anspruchs 6 gelöst, während vorteilhafte Ausgestaltungen und Weiterbildungen der Erfindung den Unteransprüchen entnommen werden können.

### Vorteile der Erfindung

Die Erfindung geht aus von einem Zutrittskontrollsystem mit zumindest einer Recheneinheit zu einer elektronischen Datenverarbeitung, mit zumindest einer akustischen Ausgabeeinheit und mit zumindest einer Steuer- und/oder Kommunikationsschnittstelleneinheit, über die die Ausgabeeinheit mit der Recheneinheit verbindbar ist, insbesondere verbunden ist.

Es wird vorgeschlagen, dass die Recheneinheit dazu eingerichtet ist, in Abhängigkeit von einer Authentifizierung einer Person eine situationsspezifische Information, insbesondere Anweisung, als Sprachausgabe mittels zumindest eines über die Steuer- und/oder Kommunikationsschnittstelleneinheit verbundenen oder verbindbaren Lautsprechers, insbesondere zumindest eines Lautsprechers der Ausgabeeinheit, auszugeben. Mittels der erfindungsgemäßen Ausgestaltung kann vorteilhaft eine individuelle Sprachausgabe erfolgen, so dass vorzugsweise ein hoher Bedienkomfort erreicht werden kann. Es kann vorteilhaft eine behindertengerechte Bedienbarkeit des Zutrittskontrollsystems ermöglicht werden. Beispielsweise kann bei einem Vorliegen einer Sehschwäche einer Person, die Zutritt zu einem Gebäude oder einem Raum bekommen möchte, mittels des erfindungsgemäßen Zutrittskontrollsystems vorteilhaft komfortabel über die Sprachausgabe ausgegeben werden, welche Bedienschritte nötig sind, welche Sicherheitsvorkehrungen zu berücksichtigen sind, welchen Weg die Person zur Erfüllung ihrer Aufgaben nach einem Zutritt gehen sollte usw.

Die situationsspezifische Information, die als Sprachausgabe mittels des Lautsprechers ausgebbar ist, kann eine aufgabenspezifische Information, insbesondere aufgabenspezifische Anweisung, an die Person, eine verhaltensspezifische Information, insbesondere verhaltensspezifische Anweisung, an die Person, eine bedienungsspezifische Information, insbesondere bedienungsspezifische Anweisung, an die Person, eine ortsspezifische Information, insbesondere ortsspezifische Anweisung, und/oder eine weitere, einem Fachmann als sinnvoll erscheinende situationsspezifische Information sein. Eine aufgabenspezifische Anweisung kann beispielsweise eine Anweisung an die Person sein, die eine Aufgabe betrifft, die die Person nach einem Betreten des Bereichs nach der Zutrittskontrolle zu erledigen hat, wie beispielsweise eine Reparaturaufgabe, eine Wartungsaufgabe, eine Lieferaufgabe, eine Kontrollaufgabe, eine Überwachungsaufgabe und/oder sonstige, einem Fachmann als sinnvoll erscheinende Aufgaben. Eine verhaltensspezifische Information, insbesondere verhaltensspezifische Anweisung, kann beispielsweise eine Anweisung an die Person sein, die ein Verhalten betrifft, das die Person nach einem Betreten des Bereichs nach der Zutrittskontrolle an den Tag zu legen hat, wie beispielsweise ein Tragen von Sicherheitskleidungsstücken, insbesondere Schutzhelm, Sicherheitsschuhe, Sicherheitsweste, Schutzmaske, Sauerstoffmaske, Schutzbrille, Gehörschutz, Sicherheitshandschuhe o. dgl., ein Einhalten von einem geringen Geräuschpegel, ein Beisichführen von zumindest einer Überwachungseinrichtung, insbesondere Stickstoffprüfgerät o. dgl., eine Desinfektion von einzelnen Körperpartien der Person oder der gesamten Person sowie deren mitgeführten Gegenständen o. dgl. und/oder sonstige, einem Fachmann als sinnvoll erscheinende verhaltensspezifische Anweisungen. Eine bedienungsspezifische Information, insbesondere bedienungsspezifische Anweisung, kann beispielsweise eine Anweisung an die Person sein, die eine Bedienung des Zutrittskontrollsystems und/oder eine Bedienung eines in dem Bereich nach der Zutrittskontrolle angeordneten und zu bedienenden Geräts betrifft, wie beispielsweise eine Angabe, welche Bedienschritte durchzuführen sind, um eine Zutrittskontrolle durchzuführen, eine Angabe, wie ein Zutrittscode von der Person eingegeben werden kann, beispielsweise mittels Tastenfeld, mittels Spracheingabe, mittels einer Gesichtserkennung, mittels eines Fingerabdrucks, mittels eines maschinenlesbaren Codes o. dgl., eine Angabe, welche Maschine von der Person bedient werden soll, wie die Maschine zu bedienen ist und/oder sonstige, einem Fachmann als sinnvoll erscheinende bedienungsspezifische Anweisungen. Eine ortsspezifische Information, insbesondere ortsspezifische Anweisung, kann beispielsweise eine Anweisung an die Person sein, wohin die Person nach einem Betreten des Bereichs nach der Zutrittskontrolle gehen sollte und/oder wie die Person an diesen vorgegebenen Ort gelangt, wie beispielsweise eine Angabe einer Zimmer- oder Hallennummer, einer Arbeitsplatznummer, einer Schließfachnummer, eines Stockwerks, einer Parkplatznummer, eine Ausgabe einer Wegbeschreibung, eine Ausgabe eines Bereichs eines Außengeländes, und/oder sonstige, einem Fachmann als sinnvoll erscheinende ortspezifische Anweisungen, und/oder die ortsspezifische Information kann eine Information hinsichtlich einer Temperatur, einer Luftfeuchtigkeit, einer Keimbelastung, einer Lärmbelastung, einer Strahlungsbelastung und/oder sonstiger, einem Fachmann einen Ort definierende Kenngrößen oder Daten sein. Die situationsspezifische Information, die als Sprachausgabe mittels des Lautsprechers ausgebbar ist, kann auch ein Gefahren- und/oder Warnhinweis sein, wie beispielsweise ein Hinweis, dass ein ungewollter Fluidaus- oder -eintritt, wie beispielsweise ein Gasleck oder ein Wassereintritt o. dgl., erkannt wurde, dass ein Unwetter bevorsteht, und/oder andere, einem Fachmann als sinnvoll erscheinende Gefahren- und/oder Warnhinweise. Die situationsspezifische Information, die als Sprachausgabe mittels des Lautsprechers ausgebbar ist, kann auch ein Fehlercode sein. Weitere, einem Fachmann als sinnvoll erscheinende situationsspezifische Informationen, die mittels des Lautsprechers als Sprachausgabe, insbesondere in Abhängigkeit von der Authentifizierung, ausgebbar sind, sind ebenfalls denkbar, wie beispielsweise eine als Grußformel oder Begrüßung ausgebildete situationsspezifische Information, die als Sprachausgabe mittels des Lautsprechers ausgebbar ist o. dgl.

Das Zutrittskontrollsystem kann als zentrales Zutrittskontrollsystem oder als dezentrales Zutrittskontrollsystem ausgebildet sein. Die Recheneinheit kann Teil einer Rechenzentrale sein, die für eine zentrale Steuerung von elektronischen Geräten in einem Gebäude eingerichtet ist und alle Aufgaben zu einer Authentifizierung einer Person ausführt, oder die Recheneinheit kann als untergeordnete Recheneinheit ausgebildet sein, die beispielsweise über eine Datenkommunikation mit einer Rechenzentrale verbunden ist und nur zu einer Steuerung von einzelnen Komponenten eingerichtet ist, während eine Authentifizierung einer Person infolge der Datenkommunikation mit der Rechenzentrale erfolgt. Bei einer Ausgestaltung der Recheneinheit als untergeordnete Recheneinheit ist es denkbar, dass die Recheneinheit lediglich zur Ansteuerung von einzelnen Einheiten des Zutrittskontrollsystems eingerichtet ist, während Hauptrechenaufgaben von einer externen Rechenzentrale, wie beispielsweise einem Server, einem Rechenzentrum o. dgl., durchführbar sind, wobei die Recheneinheit beispielsweise über ein, insbesondere kabelloses und/oder kabelgebundenes, Kommunikationsmodul der Steuer- und/oder Kommunikationsschnittstelleneinheit mit der Rechenzentrale zum Austausch von elektronischen Daten verbunden ist. Vorzugsweise ist die Recheneinheit als Mikroprozessor ausgebildet. Es ist denkbar, dass die Recheneinheit gemeinsam mit der Ausgabeeinheit auf einer elektronischen Platine angeordnet ist oder dass die Recheneinheit auf einer eigenständigen elektronischen Platine angeordnet ist, während andere, mittels der Recheneinheit ansteuerbare Einheiten des Zutrittskontrollsystems, wie beispielsweise die Ausgabeeinheit und/oder die Steuer- und/oder Kommunikationsschnittstelleneinheit, auf einer oder mehreren anderen elektronischen Platine/n angeordnet sind/ist.

Die akustische Ausgabeeinheit des Zutrittskontrollsystems umfasst bevorzugt den Lautsprecher. Es ist denkbar, dass die akustische Ausgabeeinheit alternativ oder zusätzlich zum Lautsprecher zumindest einen Summer umfasst. Die akustische Ausgabeeinheit kann weitere, einem Fachmann als sinnvoll erscheinende akustische Ausgabeelemente umfassen. Der Lautsprecher ist bevorzugt ein Teil der akustischen Ausgabeeinheit des Zutrittskontrollsystems. Der Lautsprecher kann auf oder an einer Platine des Zutrittskontrollsystems angeordnet sein und/oder zusammen mit der Recheneinheit in einer Gehäuseeinheit des Zutrittskontrollsystems angeordnet sein. Denkbar ist, dass zumindest ein Teil der Gehäuseeinheit des Zutrittskontrollsystems durch eine, insbesondere in einer Wand eines Gebäudes angeordneten, Unterputzdose ausgebildet ist. Es ist auch denkbar, dass der Lautsprecher separat zum Zutrittskontrollsystem ausgebildet und/oder angeordnet ist, wie beispielsweise eine Ausgestaltung als ein Teil eines Gebäudeakustiksystems o. dgl., wobei der Lautsprecher vorzugsweise über die Steuer- und/oder Kommunikationsschnittstelleneinheit des Zutrittskontrollsystems mittels der Recheneinheit des Zutrittskontrollsystems ansteuerbar ausgebildet ist. Der Lautsprecher kann beispielsweise als externe Einheit, wie beispielsweise als Teil eines Smartphones der Person, die authentifiziert wird, als Lautsprecher, der in einem Gebäudeteil integriert ist o. dgl., ausgebildet sein, wobei der Lautsprecher mittels der Steuer- und/oder Kommunikationsschnittstelleneinheit drahtlos oder drahtgebunden mit der Recheneinheit verbindbar/verbunden ist. Insbesondere ist es denkbar, dass der Lautsprecher als externe Einheit ausgebildet ist, wenn beispielsweise ein auf einem Smartphonebildschirm dargestellter maschinenlesbarer Code, insbesondere QR-Code o. dgl., als Authentisierungsdaten genutzt wird und die Sprachausgabe über einen Lautsprecher des Smartphones erfolgt. Weitere, einem Fachmann als sinnvoll erscheinende Ausgestaltungen und/oder Anordnungen des Lautsprechers als externe Einheit und entsprechende Möglichkeiten eines Zusammenwirkens mit der Recheneinheit zu einer Sprachausgabe sind ebenfalls denkbar.

Die Steuer- und/oder Kommunikationsschnittstelleneinheit umfasst vorzugsweise zumindest einen Signalübertragungsanschluss zu einer Verbindung mit dem Lautsprecher. Der Signalübertragungsanschluss kann kabellos oder kabelgebunden ausgebildet sein. Eine Signalübertragung an und/oder von dem Lautsprecher kann beispielsweise über Funkwellen, insbesondere Bluetooth, über Audiokabel oder über andere, einem Fachmann als sinnvoll erscheinende Übertragungsmöglichkeiten mittels des Signalübertragungsanschlusses erfolgen. Vorzugsweise umfasst die Steuer- und/oder Kommunikationsschnittstelleneinheit zumindest ein Funkwellenmodul, insbesondere RFID-Modul, vorzugsweise zu einem Auslesen von Authentisierungsdaten, die beispielsweise auf einem Authentisierungsmittel, wie beispielsweise eine Chipkarte, ein Smartphone o. dgl., einer Person gespeichert sind. Die Steuer- und/oder Kommunikationsschnittstelleneinheit kann weitere, einem Fachmann als sinnvoll erscheinende Module und/oder Anschlüsse zu einer Übertragung von Daten und/oder Steuersignalen, wie beispielsweise ein WLAN-Modul, ein LAN-Modul, ein Bluetoothmodul o. dgl., aufweisen. Die Steuer- und/oder Kommunikationsschnittstelleneinheit ist bevorzugt auf zumindest einer Platine des Zutrittskontrollsystems angeordnet. Vorzugsweise ist die Steuer- und/oder Kommunikationsschnittstelleneinheit zumindest zusammen mit der Recheneinheit in der Gehäuseeinheit des Zutrittskontrollsystems angeordnet. Vorzugsweise ist das Zutrittskontrollsystem mittels eines WLAN-Moduls oder mittels eines LAN-Moduls der Steuer- und/oder Kommunikationsschnittstelleneinheit, insbesondere auf eine, einem Fachmann bereits bekannte Art und Weise, mit einem Router eines Gebäudenetzwerks verbunden, über den vorzugsweise zumindest Daten zu einer Authentifizierung einer Person an die Recheneinheit übertragbar sind. Es ist jedoch auch denkbar, dass die Daten zur Authentifizierung einer Person als Teil einer elektronischen Datenbank in einer elektronischen Speichereinheit des Zutrittskontrollsystems abgelegt sind. Die elektronische Speichereinheit des Zutrittskontrollsystems kann auf zumindest einer Platine des Zutrittskontrollsystems angeordnet sein und/oder zumindest zusammen mit der Recheneinheit in der Gehäuseeinheit des Zutrittskontrollsystems angeordnet sein.

Des Weiteren wird vorgeschlagen, dass die Recheneinheit dazu eingerichtet ist, in Abhängigkeit von der Authentifizierung eine automatische Sprachauswahl für die Sprachausgabe durchzuführen. Beispielsweise ist denkbar, dass in Abhängigkeit von der Authentifizierung eine Nationalität der Person erkennbar ist und die Recheneinheit dazu eingerichtet ist, die Sprache der Sprachausgabe entsprechend der erkannten Nationalität der Person automatisch einzustellen, oder dass in einer Datenbank für die Person eine voreingestellte Sprache hinterlegt ist, wobei die Recheneinheit dazu eingerichtet ist, in Abhängigkeit von der Authentifizierung die Sprache aus der Datenbank automatisch auszuwählen. Weitere, einem Fachmann als sinnvoll erscheinende Möglichkeiten für eine automatische Sprachauswahl für die Sprachausgabe mittels der Recheneinheit in Abhängigkeit von der Authentifizierung sind ebenfalls denkbar. Mittels der erfindungsgemäßen Ausgestaltung kann vorteilhaft eine individuelle Sprachausgabe erfolgen, so dass vorzugsweise ein hoher Bedienkomfort erreicht werden kann. Es kann vorteilhaft automatisch eine Sprache eingestellt werden, die für die Sprachausgabe genutzt wird. Es kann vorteilhaft eine zuverlässige und verständliche Informationsausgabe an eine Person, die Zutritt zu einem Bereich bekommen möchte, der mittels des Zutrittskontrollsystems kontrolliert wird, ermöglicht werden.

Ferner wird vorgeschlagen, dass das Zutrittskontrollsystem zumindest eine akustische Eingabeeinheit, insbesondere zumindest eine ein Mikrofon umfassende akustische Eingabeeinheit, zu einer Spracheingabe umfasst, wobei die Recheneinheit dazu eingerichtet ist, in Abhängigkeit von der Spracheingabe eine automatische Sprachauswahl für die Sprachausgabe durchzuführen. Die akustische Eingabeeinheit kann auf oder an einer Platine des Zutrittskontrollsystems angeordnet sein und/oder zusammen mit der Recheneinheit in einer Gehäuseeinheit des Zutrittskontrollsystems angeordnet sein. Es ist auch denkbar, dass die akustische Eingabeeinheit, insbesondere zumindest das Mikrofon der akustischen Eingabeeinheit, separat zum Zutrittskontrollsystem ausgebildet und/oder angeordnet ist, wie beispielsweise eine Ausgestaltung als ein Teil eines Gebäudeakustiksystems o. dgl., wobei die akustische Eingabeeinheit, insbesondere zumindest das Mikrofon der akustischen Eingabeeinheit, vorzugsweise über die Steuer- und/oder Kommunikationsschnittstelleneinheit des Zutrittskontrollsystems mit der Recheneinheit des Zutrittskontrollsystems verbindbar ausgebildet ist. Die akustische Eingabeeinheit, insbesondere zumindest das Mikrofon der akustischen Eingabeeinheit, kann beispielsweise als externe Einheit, wie beispielsweise als Teil eines Smartphones der Person, die authentifiziert wird, o. dgl., ausgebildet sein, wobei die akustische Eingabeeinheit, insbesondere zumindest das Mikrofon der akustischen Eingabeeinheit, mittels der Steuer- und/oder Kommunikationsschnittstelleneinheit drahtlos oder drahtgebunden mit der Recheneinheit verbindbar/verbunden ist. Insbesondere ist es denkbar, dass die akustische Eingabeeinheit, insbesondere zumindest das Mikrofon der akustischen Eingabeeinheit, als externe Einheit ausgebildet ist, wenn beispielsweise die Spracheingabe über ein Mikrofon eines Smartphones erfolgt. Weitere, einem Fachmann als sinnvoll erscheinende Ausgestaltungen und/oder Anordnungen der akustischen Eingabeeinheit, insbesondere zumindest des Mikrofons der akustischen Eingabeeinheit, als externe Einheit und entsprechende Möglichkeiten eines Zusammenwirkens mit der Recheneinheit zu einer Spracheingabe sind ebenfalls denkbar. Vorzugsweise ist die Recheneinheit dazu eingerichtet, die über die akustische Eingabeeinheit, insbesondere über das Mikrofon der akustischen Eingabeeinheit, eingehende Spracheingabe auszuwerten, um in Abhängigkeit von der Spracheingabe eine automatische Sprachauswahl für die Sprachausgabe durchzuführen. Es ist denkbar, dass die Recheneinheit dazu eingerichtet ist, einen Stimmabgleich durchzuführen, um anhand von in einer Datenbank hinterlegten Einstellungen eine automatische Sprachauswahl für die Sprachausgabe durchzuführen, oder dass die Recheneinheit dazu eingerichtet ist, in Abhängigkeit von der Spracheingabe auf eine Nationalität einer Person zu schließen, um eine automatische Sprachauswahl für die Sprachausgabe durchzuführen. Weitere, einem Fachmann als sinnvoll erscheinende Möglichkeiten für eine automatische Sprachauswahl für die Sprachausgabe mittels der Recheneinheit in Abhängigkeit von der Spracheingabe sind ebenfalls denkbar. Mittels der erfindungsgemäßen Ausgestaltung kann vorteilhaft eine individuelle Sprachausgabe erfolgen, so dass vorzugsweise ein hoher Bedienkomfort erreicht werden kann. Es kann vorteilhaft automatisch eine Sprache eingestellt werden, die für die Sprachausgabe genutzt wird. Es kann vorteilhaft eine zuverlässige und verständliche Informationsausgabe an eine Person, die Zutritt zu einem Bereich bekommen möchte, der mittels des Zutrittskontrollsystems kontrolliert wird, ermöglicht werden.

Des Weiteren wird, insbesondere alternativ oder zusätzlich zur Sprachausgabe, vorgeschlagen, dass die Recheneinheit dazu eingerichtet ist, eine über die akustische Eingabeeinheit, insbesondere über das Mikrofon der akustischen Eingabeeinheit, eingehende Spracheingabe auszuwerten, um in Abhängigkeit von der Spracheingabe eine biometrische Spracherkennung für die Authentifizierung durchzuführen. Die eingehende Spracheingabe kann alternativ oder zusätzlich zu einer Sprachsteuerung des Zutrittskontrollsystems genutzt werden. Beispielsweise kann durch die Spracheingabe ein Bedienerwunsch geäußert werden, wie beispielsweise die Angabe von zu öffnenden Türen o. dgl., die nach erfolgreicher Authentifizierung entsprechend für die Person freigeschaltet werden, insbesondere ohne dass eine erneute Authentifizierung erfolgt. Mittels der erfindungsgemäßen Ausgestaltung kann vorteilhaft anhand einer Spracheingabe eine komfortable Authentifizierung erfolgen, so dass vorzugsweise ein hoher Bedienkomfort erreicht werden kann. Es kann vorteilhaft automatisch anhand einer Spracheingabe ein Zugang gewährt werden.

Zudem wird vorgeschlagen, dass das Zutrittskontrollsystem zumindest eine Umgebungsüberwachungseinheit, insbesondere zumindest eine Kamera umfassende Umgebungsüberwachungseinheit, zu einer Erfassung einer Annäherung einer Person umfasst, wobei in Abhängigkeit von der Erfassung der Annäherung mittels der Steuer- und/oder Kommunikationsschnittstelleneinheit, insbesondere mittels eines drahtlosen Kommunikationsmoduls der Steuer- und/oder Kommunikationsschnittstelleneinheit, ein automatischer Verbindungsaufbau zu einer externen Einheit, insbesondere Smartphone, startbar ist und/oder die situationsspezifische Information in Form der Sprachausgabe über den Lautsprecher ausgebbar ist. Die Umgebungsüberwachungseinheit des Zutrittskontrollsystems umfasst bevorzugt die Kamera. Es ist denkbar, dass die Umgebungsüberwachungseinheit alternativ oder zusätzlich zur Kamera zumindest einen Annäherungssensor, wie beispielsweise einen Ultraschallsensor o. dgl., umfasst. Die Umgebungsüberwachungseinheit kann weitere, einem Fachmann als sinnvoll erscheinende Sensorelemente umfassen. Die Kamera kann auf oder an einer Platine des Zutrittskontrollsystems angeordnet sein und/oder zusammen mit der Recheneinheit in einer Gehäuseeinheit des Zutrittskontrollsystems angeordnet sein. Es ist auch denkbar, dass die Kamera separat zum Zutrittskontrollsystem ausgebildet und/oder angeordnet ist, wie beispielsweise eine Ausgestaltung als ein Teil eines Gebäudeüberwachungssystems o. dgl., wobei die Kamera vorzugsweise über die Steuer- und/oder Kommunikationsschnittstelleneinheit des Zutrittskontrollsystems zu einer Datenübertragung mit der Recheneinheit des Zutrittskontrollsystems verbunden ist. Die Kamera kann beispielsweise als externe Einheit, wie beispielsweise als Kamera, die an einer Gebäudewand angeordnet ist o. dgl., ausgebildet sein, wobei die Kamera mittels der Steuer- und/oder Kommunikationsschnittstelleneinheit drahtlos oder drahtgebunden mit der Recheneinheit verbindbar/verbunden ist. Weitere, einem Fachmann als sinnvoll erscheinende Ausgestaltungen und/oder Anordnungen der Kamera als externe Einheit und entsprechende Möglichkeiten eines Zusammenwirkens mit der Recheneinheit zu einer Erfassung einer Annäherung sind ebenfalls denkbar. Alternativ oder zusätzlich zu einem Erfassen einer Annäherung einer Person ist die Kamera bevorzugt zum Einlesen von Authentisierungsdaten einer Person zur Authentifizierung vorgesehen. Beispielsweise ist denkbar, dass mittels der Kamera ein auf einem Smartphonebildschirm dargestellter maschinenlesbarer Code, insbesondere QR-Code o. dgl., als Authentisierungsdaten genutzt wird oder ein Gesicht einer Person mittels der Kamera erfasst wird, wobei die Recheneinheit bevorzugt dazu eingerichtet ist, eine Gesichtserkennung zu einer Authentifizierung durchzuführen. Die Kamera kann beispielsweise als Teil des Smartphones der Person, die authentifiziert wird, ausgebildet sein, wobei die Kamera über die Steuer- und/oder Kommunikationsschnittstelleneinheit mit der Recheneinheit zu einer Datenübertragung, insbesondere kabellos, verbindbar ist. Weitere, einem Fachmann als sinnvoll erscheinende Ausgestaltungen und/oder Anordnungen der Kamera als und entsprechende Möglichkeiten eines Zusammenwirkens mit der Recheneinheit sind ebenfalls denkbar. Mittels der erfindungsgemäßen Ausgestaltung kann vorteilhaft bereits eine Verbindung zu einer externen Einheit aufgebaut werden und/oder bereits ein Hinweis über den Lautsprecher an eine Person ausgegeben werden, während sich die Person dem Zutrittskontrollsystem nähert, so dass eine komfortable Bedienung ermöglicht werden kann, insbesondere da eine manuelle Aktivierung einer Verbindung zwischen der externen Einheit und dem Zutrittskontrollsystem eingespart werden kann.

Des Weiteren wird vorgeschlagen, dass das Zutrittskontrollsystem zumindest eine elektronische Hauptplatine, auf der zumindest die Recheneinheit angeordnet ist, und zumindest eine elektronische Nebenplatine umfasst, auf der zumindest die akustische Ausgabeeinheit und/oder die Steuer- und/oder Kommunikationsschnittstelleneinheit angeordnet sind/ist, wobei die Nebenplatine, insbesondere lösbar, an der Hauptplatine angeordnet ist, vorzugsweise in einer sich zumindest im Wesentlichen parallel zu einer Haupterstreckungsebene der Hauptplatine erstreckenden Ebene versetzt zur Hauptplatine an der Hauptplatine befestigt ist. Es ist denkbar, dass das Zutrittskontrollsystem zur Lösung der oben genannten Aufgabe in einer alternativen Ausgestaltung unabhängig von der durch die Recheneinheit in Abhängigkeit von einer Authentifizierung initiierten Sprachausgabe über den Lautsprecher ausgebildet ist. Vorzugsweise umfasst das Zutrittskontrollsystem in der alternativen Ausgestaltung, insbesondere in der unabhängig von der durch die Recheneinheit in Abhängigkeit von einer Authentifizierung initiierten Sprachausgabe über den Lautsprecher ausgebildeten Ausgestaltung, zumindest die Recheneinheit zu einer elektronischen Datenverarbeitung, zumindest die akustische Ausgabeeinheit, zumindest die Steuer- und/oder Kommunikationsschnittstelleneinheit, über die die Ausgabeeinheit mit der Recheneinheit verbindbar ist, insbesondere verbunden ist, zumindest die elektronische Hauptplatine, auf der zumindest die Recheneinheit angeordnet ist, und zumindest die elektronische Nebenplatine, auf der zumindest die akustische Ausgabeeinheit und/oder die Steuer- und/oder Kommunikationsschnittstelleneinheit angeordnet sind/ist, wobei die Nebenplatine, insbesondere lösbar, an der Hauptplatine angeordnet ist. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Bevorzugt sind die Hauptplatine und die Nebenplatine zu einer Anordnung in einer Unterputzdose, insbesondere einer Unterputzdose gemäß DIN 49073 | 2007-09, vorgesehen. Vorzugsweise umfasst die Hauptplatine und/oder die Nebenplatine zumindest ein oder mehrere Verbindungselement/e, insbesondere Schraubenaufnahme/n und/oder Spreizkrallenfeder/n, insbesondere zu einer Befestigung an der Unterputzdose. Die Nebenplatine ist bevorzugt gemäß einem "Plug-and-Play-Prinzip" an der Hauptplatine lösbar angeordnet. Vorzugsweise ist die Nebenplatine bei Bedarf von der Hauptplatine abnehmbar, insbesondere um durch eine andere Nebenplatine ersetzt zu werden, vorzugsweise um vorteilhaft und konstruktiv einfach eine Erweiterung und/oder Ergänzung von Funktionen des Zutrittskontrollsystems zu ermöglichen. Das Zutrittskontrollsystem kann weitere Platinen aufweisen, die direkt oder indirekt an der Hauptplatine anordenbar sind. Mittels der erfindungsgemäßen Ausgestaltung kann vorteilhaft ein kompaktes und einfach zu erweiterndes Zutrittskontrollsystem realisiert werden, das einen hohen Bedienkomfort ermöglicht und bei Bedarf einfach erweiterbar oder einfach auf einen neuen Stand bringbar ist, insbesondere komfortabel upgradefähig ist. Zudem kann vorteilhaft ein kompaktes Zutrittskontrollsystem realisiert werden, das einfach in einer Unterputzdose integriert werden kann und dennoch eine Vielzahl an Funktionen aufweist, die vorteilhaft erweiterbar sind.

Ferner geht die Erfindung aus von einem Verfahren zu einem Betrieb eines Zutrittskontrollsystems, insbesondere eines erfindungsgemäßen Zutrittskontrollsystems. Es wird vorgeschlagen, dass in Abhängigkeit von einer Authentifizierung einer Person eine situationsspezifische Information, insbesondere eine Anweisung, als Sprachausgabe mittels eines Lautsprechers, insbesondere mittels des Lautsprechers der akustischen Ausgabeeinheit des Zutrittskontrollsystems, an die Person ausgegeben wird. Die bereits oben aufgeführten Merkmale zum Zutrittskontrollsystem gelten vorzugsweise analog für Verfahrensschritte des Verfahrens. Mittels der erfindungsgemäßen Ausgestaltung kann vorteilhaft eine individuelle Sprachausgabe erfolgen, so dass vorzugsweise ein hoher Bedienkomfort erreicht werden kann. Es kann vorteilhaft eine behindertengerechte Bedienbarkeit des Zutrittskontrollsystems ermöglicht werden. Beispielsweise kann bei einem Vorliegen einer Sehschwäche einer Person, die Zutritt zu einem Gebäude oder einem Raum bekommen möchte, mittels des erfindungsgemäßen Zutrittskontrollsystems vorteilhaft komfortabel über die Sprachausgabe ausgegeben werden, welche Bedienschritte nötig sind, welche Sicherheitsvorkehrungen zu berücksichtigen sind, welchen Weg die Person zur Erfüllung ihrer Aufgaben nach einem Zutritt gehen sollte usw.

Zudem wird vorgeschlagen, dass eine, insbesondere die bereits zuvor genannte, Recheneinheit des Zutrittskontrollsystems in Abhängigkeit von der Authentifizierung eine automatische Sprachauswahl für die Sprachausgabe durchführt. Mittels der erfindungsgemäßen Ausgestaltung kann vorteilhaft eine individuelle Sprachausgabe erfolgen, so dass vorzugsweise ein hoher Bedienkomfort erreicht werden kann. Es kann vorteilhaft automatisch eine Sprache eingestellt werden, die für die Sprachausgabe genutzt wird. Es kann vorteilhaft eine zuverlässige und verständliche Informationsausgabe an eine Person, die Zutritt zu einem Bereich bekommen möchte, der mittels des Zutrittskontrollsystems kontrolliert wird, ermöglicht werden.

Des Weiteren wird vorgeschlagen, dass eine, insbesondere die bereits zuvor genannte, Recheneinheit des Zutrittskontrollsystems in Abhängigkeit von einer Spracheingabe über eine akustische Eingabeeinheit, insbesondere die bereits zuvor genannte und zumindest ein Mikrofon umfassende, akustische Eingabeeinheit des Zutrittskontrollsystems, eine automatische Sprachauswahl für die Sprachausgabe durchführt. Mittels der erfindungsgemäßen Ausgestaltung kann vorteilhaft eine individuelle Sprachausgabe erfolgen, so dass vorzugsweise ein hoher Bedienkomfort erreicht werden kann. Es kann vorteilhaft automatisch eine Sprache eingestellt werden, die für die Sprachausgabe genutzt wird. Es kann vorteilhaft eine zuverlässige und verständliche Informationsausgabe an eine Person, die Zutritt zu einem Bereich bekommen möchte, der mittels des Zutrittskontrollsystems kontrolliert wird, ermöglicht werden.

Ferner wird vorgeschlagen, dass über den Lautsprecher eine Handlungsanweisung und/oder ein Sicherheitshinweis als Sprachausgabe an die Person ausgegeben wird. Mittels der über den Lautsprecher ausgegebenen Handlungsanweisung und/oder mittels des über den Lautsprecher ausgegebenen Sicherheitshinweises kann beispielsweise die Person aufgefordert werden zumindest ein Sicherheitskleidungsstück, insbesondere Schutzhelm, Sicherheitsschuhe, Sicherheitsweste, Schutzmaske, Sauerstoffmaske, Schutzbrille, Gehörschutz, Sicherheitshandschuhe o. dgl., zu tragen, eine Desinfektion von einzelnen Körperpartien oder der gesamten Person sowie deren mitgeführten Gegenständen durchzuführen o. dgl. Alternativ oder zusätzlich kann mittels der über den Lautsprecher ausgegebenen Handlungsanweisung beispielsweise der Person auch mitgeteilt werden, wie eine Bedienung des Zutrittskontrollsystems und/oder eine Bedienung eines in dem Bereich nach der Zutrittskontrolle angeordneten und zu bedienenden Geräts zu erfolgen hat, wie beispielsweise eine Angabe, welche Bedienschritte durchzuführen sind, um eine Zutrittskontrolle durchzuführen, eine Angabe, wie ein Zutrittscode von der Person einzugeben ist, eine Angabe, welche Arbeitsschritte nach Betreten des Bereichs hinter dem Zutrittskontrollsystem durchzuführen sind und/oder sonstige, einem Fachmann als sinnvoll erscheinende Anweisungen. Mittels der erfindungsgemäßen Ausgestaltung kann vorteilhaft ein hoher Bedienkomfort erreicht werden. Es kann vorteilhaft eine zuverlässige und individuelle Informationsübertragung an eine Person ermöglicht werden.

Zudem wird vorgeschlagen, dass über den Lautsprecher eine Wegbeschreibung als Sprachausgabe an die Person ausgegeben wird. Beispielsweise wird der Person mittels der über den Lautsprecher ausgegebenen Wegbeschreibung mitgeteilt, in welchen Raum eines Gebäudes und/oder in welchen Bereich eines Geländes die Person gehen soll und wie genau sie dorthin gelangt. Mittels der erfindungsgemäßen Ausgestaltung kann vorteilhaft eine zuverlässige und individuelle Informationsübertragung an eine Person ermöglicht werden.

Ferner wird, insbesondere alternativ oder zusätzlich zur Sprachausgabe, vorgeschlagen, dass eine, insbesondere die bereits genannte, Recheneinheit des Zutrittskontrollsystems in Abhängigkeit von einer Spracheingabe über eine, insbesondere die bereits zuvor genannte, akustische Eingabeeinheit, insbesondere das Mikrofon, des Zutrittskontrollsystems eine biometrische Spracherkennung für die Authentifizierung durchführt. Mittels der erfindungsgemäßen Ausgestaltung kann vorteilhaft anhand einer Spracheingabe eine komfortable Authentifizierung erfolgen, so dass vorzugsweise ein hoher Bedienkomfort erreicht werden kann. Es kann vorteilhaft automatisch anhand einer Spracheingabe ein Zugang gewährt werden.

Das erfindungsgemäße Zutrittskontrollsystem und/oder das erfindungsgemäße Verfahren sollen/soll hierbei nicht auf die oben beschriebene Anwendung und Ausführungsform beschränkt sein. Insbesondere können/kann das erfindungsgemäße Zutrittskontrollsystem und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Zutrittskontrollsystem, das im Nahbereich einer Tür angeordnet ist, in einer schematischen Darstellung,
- Fig. 2: eine Detailansicht des erfindungsgemäßen Zutrittskontrollsystems in einem von einer Gehäuseeinheit des erfindungsgemäßen Zutrittskontrollsystems ausgebauten Zustand in einer schematischen Darstellung,
- Fig. 3: eine weitere Detailansicht des erfindungsgemäßen Zutrittskontrollsystems in einem von der Gehäuseeinheit des erfindungsgemäßen Zutrittskontrollsystems ausgebauten Zustand in einer schematischen Darstellung,
- Fig. 4: eine Seitansicht des erfindungsgemäßen Zutrittskontrollsystems in einem von der Gehäuseeinheit des erfindungsgemäßen Zutrittskontrollsystems ausgebauten Zustand, wobei eine Nebenplatine des erfindungsgemäßen Zutrittskontrollsystems und eine Hauptplatine in einem voneinander getrennten Zustand dargestellt sind, in einer schematischen Darstellung und
- Fig. 5: einen schematischen Verfahrensablauf eines erfindungsgemäßen Verfahrens zu einem Betrieb des erfindungsgemäßen Zutrittskontrollsystems.

### Beschreibung des Ausführungsbeispiels

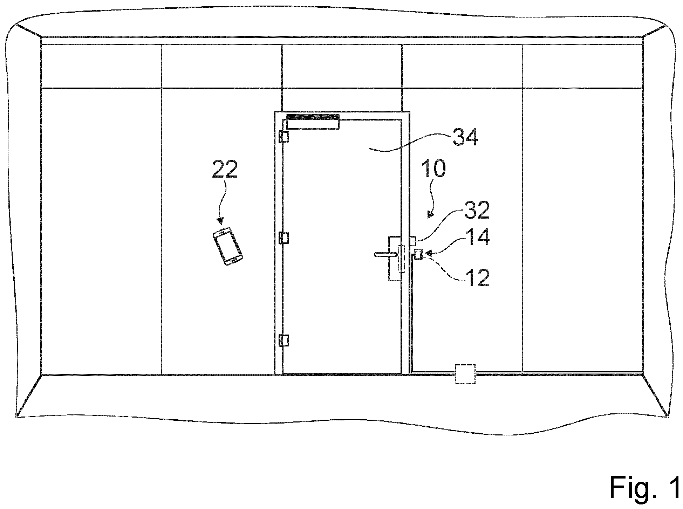

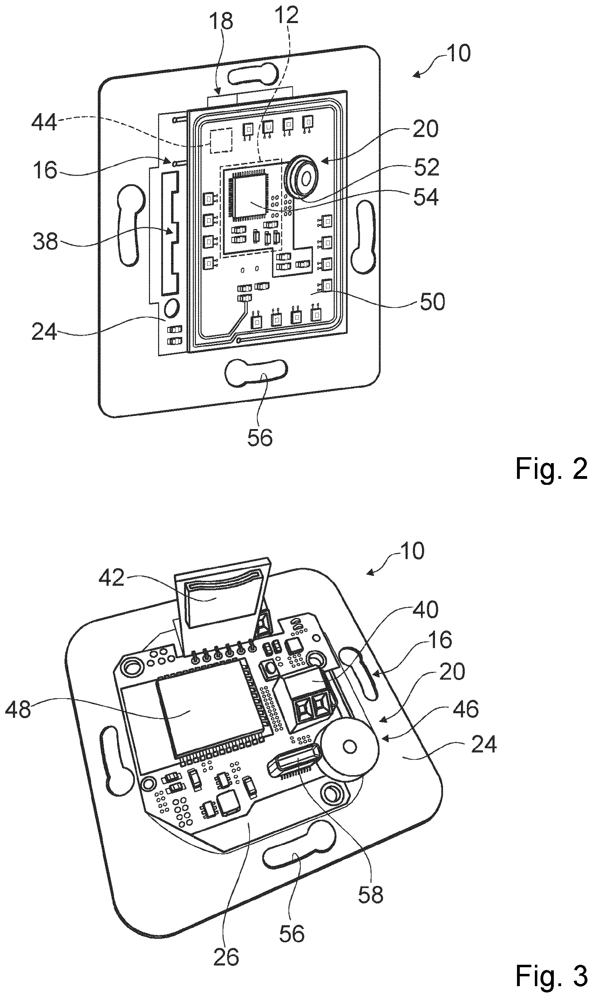

Figur 1 zeigt ein Zutrittskontrollsystem 10, das zu einer Zutrittskontrolle zu einem mit einer Tür 34 verschlossenen Raum vorgesehen ist. Das Zutrittskontrollsystem 10 ist in Figur 1 beispielhaft in einem Nahbereich der Tür 34 angeordnet. Die in Figur 1 dargestellte Anordnung ist lediglich beispielhaft zu einer Erläuterung von Funktionen des Zutrittskontrollsystems 10 zu verstehen und soll nicht als Einschränkung des Zutrittskontrollsystems 10 auf eine Anwendung und/oder Anordnung an Türen 34 verstanden werden. Das Zutrittskontrollsystem 10 ist vorzugsweise auf eine, einem Fachmann bekannte Art und Weise dazu eingerichtet, nach einer Überprüfung einer Zugangsberechtigung einer Person, einen Zugang zum Raum zu gewähren oder zu unterbinden. Das Zutrittskontrollsystem 10 ist bevorzugt auf eine, einem Fachmann bekannte Art und Weise mit einer Schließvorrichtung (hier nicht näher dargestellt) der Tür 34 verbunden, insbesondere um ein Öffnen oder ein Verschlossenhalten der Türe 34 in Abhängigkeit von der Prüfung der Zugangsberechtigung zu realisieren. Das Zutrittskontrollsystem 10 umfasst zumindest eine Recheneinheit 12 zu einer elektronischen Datenverarbeitung, zumindest eine akustische Ausgabeeinheit 14 und zumindest eine Steuer- und/oder Kommunikationsschnittstelleneinheit 16, über die die Ausgabeeinheit 14 mit der Recheneinheit 12 verbindbar ist, insbesondere verbunden ist (vgl. hierzu insbesondere Figuren 2 bis 4). Vorzugsweise ist die Recheneinheit 12 als Mikroprozessor ausgebildet. Die Recheneinheit 12 kann jedoch in einer alternativen Ausgestaltung des Zutrittskontrollsystems 10 ein Teil einer Rechenzentrale sein, die für eine zentrale Steuerung von elektronischen Geräten in einem Gebäude eingerichtet ist. Die akustische Ausgabeeinheit 14 umfasst bevorzugt zumindest einen Summer 36 (vgl. hierzu insbesondere Figuren 2 bis 4), der zu einer Ausgabe eines Bestätigungstons in Abhängigkeit von einer Authentifizierung einer Person vorgesehen ist.

Das Zutrittskontrollsystem 10 umfasst bevorzugt zumindest eine optische Ausgabeeinheit 38 (vgl. hierzu insbesondere Figuren 2 bis 4), die insbesondere zu einer Ausgabe einer optischen Statusanzeige und/oder zu einer Ausgabe einer optischen Bestätigung in Abhängigkeit von der Authentifizierung einer Person vorgesehen ist. Die optische Ausgabeeinheit 38 umfasst bevorzugt zumindest eine oder mehrere LED/s zu einer Ausgabe einer optischen Statusanzeige und/oder zu einer Ausgabe einer optischen Bestätigung. Die optische Ausgabeeinheit 38 kann weitere, einem Fachmann als sinnvoll erscheinende optische Ausgabeelemente umfassen, wie beispielsweise einen Bildschirm o. dgl.

Vorzugsweise umfasst die Steuer- und/oder Kommunikationsschnittstelleneinheit 16 zumindest ein Funkwellenmodul 54 (vgl. hierzu insbesondere Figuren 2 bis 4), insbesondere ein RFID-Modul, vorzugsweise zu einem Auslesen von Authentisierungsdaten, die beispielsweise auf einem Authentisierungsmittel, wie beispielsweise auf einer Chipkarte, auf einem Smartphone o. dgl., einer Person gespeichert sind. Die Steuer- und/oder Kommunikationsschnittstelleneinheit 16 kann weitere, einem Fachmann als sinnvoll erscheinende Module und/oder Anschlüsse zu einer Übertragung von Daten und/oder Steuersignalen, wie beispielsweise ein WLAN-Modul, ein LAN-Modul, ein Bluetoothmodul o. dgl., aufweisen. Vorzugsweise ist das Zutrittskontrollsystem 10 mittels eines WLAN-Moduls oder mittels eines LAN-Moduls der Steuer- und/oder Kommunikationsschnittstelleneinheit 16, insbesondere auf eine, einem Fachmann bereits bekannte Art und Weise, mit einem Router eines Gebäudenetzwerks verbunden, über den vorzugsweise zumindest Daten zur Authentifizierung einer Person an die Recheneinheit 12 übertragbar sind. Es ist jedoch auch denkbar, dass die Daten zur Authentifizierung einer Person als Teil einer elektronischen Datenbank in einer elektronischen Speichereinheit des Zutrittskontrollsystems 10 abgelegt sind. Die elektronische Speichereinheit des Zutrittskontrollsystems 10 kann auf zumindest einer Platine des Zutrittskontrollsystems 10 angeordnet sein und/oder zumindest zusammen mit der Recheneinheit 12 in einer Gehäuseeinheit (hier nicht näher dargestellt) des Zutrittskontrollsystems 10 angeordnet sein.

Die Recheneinheit 12 ist bevorzugt dazu eingerichtet, in Abhängigkeit von der Authentifizierung einer Person eine situationsspezifische Information, insbesondere eine Anweisung oder einen Fehlercode, als Sprachausgabe mittels zumindest eines über die Steuer- und/oder Kommunikationsschnittstelleneinheit 16 verbundenen oder verbindbaren Lautsprechers 32 auszugeben. Die Steuer- und/oder Kommunikationsschnittstelleneinheit 16 umfasst vorzugsweise zumindest einen Signalübertragungsanschluss 40 zu einer Verbindung mit dem Lautsprecher 32 (vgl. hierzu insbesondere Figuren 2 bis 4). Der Signalübertragungsanschluss 40 kann kabellos oder kabelgebunden ausgebildet sein. Eine Signalübertragung an und/oder von dem Lautsprecher 32 kann beispielsweise über Funkwellen, insbesondere Bluetooth, über Audiokabel oder über andere, einem Fachmann als sinnvoll erscheinende Übertragungsmöglichkeiten mittels des Signalübertragungsanschlusses 40 erfolgen. In dem in den Figuren 2 bis 4 dargestellten Ausführungsbeispiel ist der Signalübertragungsanschluss 40 beispielhaft als kabelgebundener Audiokabelanschluss ausgebildet.

Der Lautsprecher 32 ist in dem in der Figur 1 dargestellten Ausführungsbeispiel beispielhaft als separat zum Zutrittskontrollsystem 10 angeordnetes und/oder ausgebildetes Bauteil ausgebildet, insbesondere als ein Teil eines Gebäudeakustiksystems o. dgl., wobei der Lautsprecher 32 vorzugsweise über die Steuer- und/oder Kommunikationsschnittstelleneinheit 16 des Zutrittskontrollsystems 10 mittels der Recheneinheit 12 des Zutrittskontrollsystems 10 ansteuerbar ausgebildet ist. Es ist jedoch auch in einem alternativen, hier nicht näher dargestellten Ausführungsbeispiel des Zutrittskontrollsystems 10 denkbar, dass der Lautsprecher 32 ein Teil der akustischen Ausgabeeinheit 14 des Zutrittskontrollsystems 10 ist. Der Lautsprecher 32 kann in dem alternativen, hier nicht näher dargestellten Ausführungsbeispiel des Zutrittskontrollsystems 10 auf oder an einer Platine des Zutrittskontrollsystems 10 angeordnet sein und/oder zusammen mit der Recheneinheit 12 in der Gehäuseeinheit des Zutrittskontrollsystems 10 angeordnet sein. Denkbar ist, dass zumindest ein Teil der Gehäuseeinheit des Zutrittskontrollsystems 10 durch eine, insbesondere in einer Wand eines Gebäudes angeordnete, Unterputzdose ausgebildet ist. Weitere, einem Fachmann als sinnvoll erscheinende Ausgestaltungen und/oder Anordnungen des Lautsprechers 32 und entsprechende Möglichkeiten eines Zusammenwirkens mit der Recheneinheit 12 zu einer Sprachausgabe sind ebenfalls denkbar.

Vorzugsweise ist die Recheneinheit 12 dazu eingerichtet, in Abhängigkeit von der Authentifizierung eine automatische Sprachauswahl für die Sprachausgabe über den Lautsprecher 32 durchzuführen. Vorzugsweise sind Audiodateien, die für die Sprachausgabe nutzbar sind, in einer elektronischen Speichereinheit oder auf einer elektronischen Speicherkarte (hier nicht näher dargestellt) hinterlegt. Es ist denkbar, dass die Steuer- und/oder Kommunikationsschnittstelleneinheit 16 zumindest einen Speicherkartenslot 42, insbesondere SD-Kartenslot, (vgl. hierzu insbesondere Figuren 2 bis 4), in dem zumindest die elektronische Speicherkarte auswechselbar einsteckbar ist, umfasst, oder dass das Zutrittskontrollsystem 10 zumindest die Speichereinheit umfasst, die auf einer elektronischen Platine des Zutrittskontrollsystems 10 angeordnet ist und über die Steuer- und/oder Kommunikationsschnittstelleneinheit 16 mit der Recheneinheit 12 zu einem Datenaustausch verbunden ist. Es ist jedoch auch denkbar, dass die Speichereinheit als externe Einheit ausgebildet ist, wie beispielsweise als Teil eines Gebäudenetzwerks, mit dem die Recheneinheit 12 beispielsweise über die Steuer- und/oder Kommunikationsschnittstelleneinheit 16 zu einer Datenübertragung verbindbar ist, insbesondere verbunden ist.

Das Zutrittskontrollsystem 10 umfasst vorzugsweise zumindest eine akustische Eingabeeinheit 18 (vgl. hierzu insbesondere Figuren 2 bis 4), insbesondere zumindest ein Mikrofon 44 umfassende akustische Eingabeeinheit 18, zu einer Spracheingabe, wobei die Recheneinheit 12 dazu eingerichtet ist, in Abhängigkeit von der Spracheingabe eine automatische Sprachauswahl für die Sprachausgabe durchzuführen. Alternativ oder zusätzlich ist die Recheneinheit 12 dazu eingerichtet ist, in Abhängigkeit von der Spracheingabe eine biometrische Spracherkennung für die Authentifizierung durchzuführen. Es ist auch denkbar, dass die akustische Eingabeeinheit 18, insbesondere zumindest das Mikrofon 44 der akustischen Eingabeeinheit 18, separat zum Zutrittskontrollsystem 10 ausgebildet und/oder angeordnet ist, wobei die Recheneinheit 12 über die Steuer- und/oder Kommunikationsschnittstelleneinheit 16 zu einer Datenübertragung mit der akustischen Eingabeeinheit 18, insbesondere zumindest mit dem Mikrofon 44, verbindbar ist, insbesondere verbunden ist.

Bevorzugt umfasst das Zutrittskontrollsystem 10 zumindest eine Umgebungsüberwachungseinheit 20, insbesondere zumindest eine Kamera 46 umfassende Umgebungsüberwachungseinheit 20 (vgl. hierzu insbesondere Figuren 2 bis 4), zu einer Erfassung einer Annäherung einer Person, wobei in Abhängigkeit von der Erfassung der Annäherung mittels der Steuer- und/oder Kommunikationsschnittstelleneinheit 16, insbesondere mittels eines drahtlosen Kommunikationsmoduls der Steuer- und/oder Kommunikationsschnittstelleneinheit 16, ein automatischer Verbindungsaufbau zu einer externen Einheit 22, insbesondere Smartphone, startbar ist und/oder die situationsspezifische Information in Form der Sprachausgabe über den Lautsprecher 32 ausgebbar ist. Es ist jedoch auch denkbar, dass die Umgebungsüberwachungseinheit 20, insbesondere zumindest die Kamera 46 der Umgebungsüberwachungseinheit 20, separat zum Zutrittskontrollsystem 10 ausgebildet und/oder angeordnet ist, wobei die Recheneinheit 12 über die Steuer- und/oder Kommunikationsschnittstelleneinheit 16 zu einer Datenübertragung mit der Umgebungsüberwachungseinheit 20, insbesondere zumindest mit der Kamera 46, verbindbar ist, insbesondere verbunden ist.

In den Figuren 2 bis 4 sind verschiedene Ansichten des Zutrittskontrollsystems 10 in einem aus der Gehäuseeinheit ausgebauten Zustand dargestellt. Das Zutrittskontrollsystem 10 umfasst vorzugsweise zumindest eine elektronische Hauptplatine 24, auf der zumindest die Recheneinheit 12 angeordnet ist, und zumindest eine elektronische Nebenplatine 26, auf der, zumindest ein Teil, vorzugsweise ein Großteil, der Steuer- und/oder Kommunikationsschnittstelleneinheit 16 angeordnet ist, wobei die Nebenplatine 26, insbesondere lösbar, an der Hauptplatine 24 angeordnet ist. Bei dem Ausführungsbeispiel des Zutrittskontrollsystems 10, bei dem der Lautsprecher 32 ein Teil der akustischen Ausgabeeinheit 14 ist, ist es denkbar, dass auf der Nebenplatine 26 auch der Lautsprecher 32 angeordnet ist. Die Nebenplatine 26 ist vorzugsweise in einer sich zumindest im Wesentlichen parallel zu einer Haupterstreckungsebene 28 der Hauptplatine 24 erstreckenden Ebene versetzt zur Hauptplatine 24 an der Hauptplatine 24 befestigt. Insbesondere ist die Nebenplatine 26 über die Steuer- und/oder Kommunikationsschnittstelleneinheit 16 zu einer Übertragung von elektronischen Daten mit der Hauptplatine 24 verbunden. Vorzugsweise umfasst das Zutrittskontrollsystem 10 eine zusätzliche Recheneinheit 48, die auf der Nebenplatine 26 angeordnet ist, insbesondere zu einer Bereitstellung von einer zusätzlichen Rechenleistung. Vorzugsweise ist der Signalübertragungsanschluss 40 auf der Nebenplatine 26 angeordnet. Der Speicherkartenslot 42 ist bevorzugt auf der Nebenplatine 26 angeordnet. Insbesondere ist zumindest ein Signalverstärker 58 des Zutrittskontrollsystems 10, der zu einem Zusammenwirken mit dem Lautsprecher 32 vorgesehen ist, auf der Nebenplatine 26 angeordnet. Auf der Hauptplatine 24 ist vorzugsweise der Summer 36 der akustischen Ausgabeeinheit 14 angeordnet. Bevorzugt ist die Kamera 46 der Umgebungsüberwachungseinheit 20 auf der Hauptplatine 24 angeordnet.

Das Zutrittskontrollsystem 10 umfasst vorzugsweise eine weitere Nebenplatine 50, die an der Hauptplatine 24 angeordnet ist. Die weitere Nebenplatine 50 ist vorzugsweise in einer sich zumindest im Wesentlichen parallel zur Haupterstreckungsebene 28 der Hauptplatine 24 erstreckenden Ebene versetzt zur Hauptplatine 24 an der Hauptplatine 24 befestigt, insbesondere auf einer der Nebenplatine 26 abgewandten Seite der Hauptplatine 24. Die weitere Nebenplatine 50 umfasst bevorzugt zumindest eine Kameraöffnung 52, durch die die auf der Hauptplatine 24 angeordnete Kamera 46 hindurchblicken kann. Vorzugsweise ist auf der weiteren Nebenplatine 50 die optische Ausgabeeinheit 38 angeordnet. Das Funkwellenmodul 54 ist bevorzugt auf der weiteren Nebenplatine 50 angeordnet. Das Mikrofon 44 kann in zumindest einem Ausführungsbeispiel des Zutrittskontrollsystems 10 auf der weiteren Nebenplatine 50 angeordnet sein.

Bevorzugt sind die Hauptplatine 24, die Nebenplatine 26 und/oder die weitere Nebenplatine 50 zu einer Anordnung in einer Unterputzdose, insbesondere einer Unterputzdose gemäß DIN 49073 | 2007-09, vorgesehen, insbesondere als gemeinsame Baugruppe. Vorzugsweise umfasst die Hauptplatine 24, die Nebenplatine 26 und/oder die weitere Nebenplatine 50 zumindest ein oder mehrere Verbindungselement/e 56, insbesondere Schraubenaufnahme/n und/oder Spreizkrallenfeder/n, insbesondere zu einer Befestigung an der Unterputzdose auf eine, einem Fachmann bereits bekannte Art und Weise. Die Nebenplatine 26 und/oder die weitere Nebenplatine 50 ist bevorzugt gemäß einem "Plug-and-Play-Prinzip" an der Hauptplatine 24 lösbar angeordnet. Vorzugsweise ist die Nebenplatine 26 und/oder die weitere Nebenplatine 50 bei Bedarf von der Hauptplatine 24 abnehmbar, insbesondere um durch eine oder mehrere andere Nebenplatine/n ersetzt zu werden, vorzugsweise um vorteilhaft und konstruktiv einfach eine Erweiterung und/oder Ergänzung von Funktionen des Zutrittskontrollsystems 10 zu ermöglichen. Das Zutrittskontrollsystem 10 kann weitere Platinen aufweisen, die direkt oder indirekt an der Hauptplatine 24 anordenbar sind.

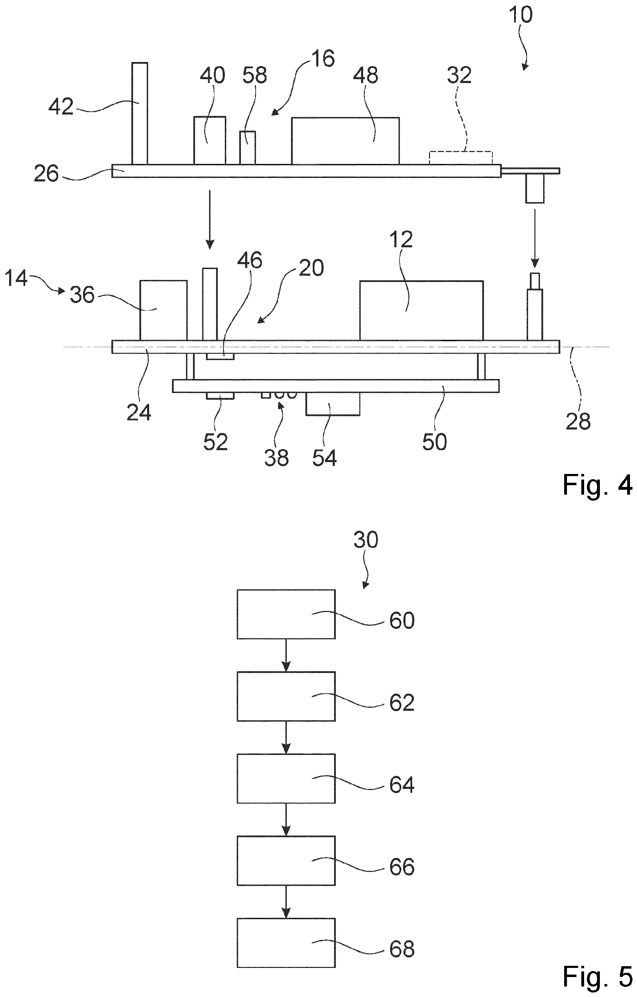

In Figur 5 ist ein schematischer Verfahrensablauf eines Verfahrens 30 zu einem Betrieb des Zutrittskontrollsystems 10 dargestellt. In zumindest einem Verfahrensschritt 60 des Verfahrens 30 werden, insbesondere über das Funkwellenmodul 54, bevorzugt Authentisierungsdaten von einer Person, die beispielsweise auf einer Chipkarte, auf einem Smartphone o. dgl. gespeichert sind, ausgelesen, insbesondere um die Authentisierungsdaten der Recheneinheit 12 zu einer Authentifizierung zur Verfügung zu stellen. In zumindest einem, insbesondere weiteren, Verfahrensschritt 62 des Verfahrens 30 erfolgt vorzugsweise mittels der Recheneinheit 12 eine Authentifizierung. In zumindest einem, insbesondere weiteren, Verfahrensschritt 64 des Verfahrens 30 führt die Recheneinheit 12 bevorzugt in Abhängigkeit von der Authentifizierung eine automatische Sprachauswahl für die Sprachausgabe durch. Alternativ oder zusätzlich führt die Recheneinheit 12 in dem zumindest einen, insbesondere weiteren, Verfahrensschritt 64 des Verfahrens 30 eine automatische Sprachauswahl für die Sprachausgabe in Abhängigkeit von einer Spracheingabe über die akustische Eingabeeinheit 18, insbesondere über das Mikrofon 44, durch. Alternativ oder zusätzlich führt die Recheneinheit 12 in zumindest einem Verfahrensschritt (hier nicht näher dargestellt) des Verfahrens 30 in Abhängigkeit von der Spracheingabe eine biometrische Spracherkennung für die Authentifizierung durch. Bevorzugt wird in zumindest einem, insbesondere weiteren, Verfahrensschritt 66 des Verfahrens 30 in Abhängigkeit von der Authentifizierung einer Person eine situationsspezifische Information, insbesondere eine Anweisung, als Sprachausgabe mittels des Lautsprechers 32 an die Person ausgegeben. In dem zumindest einen, insbesondere weiteren, Verfahrensschritt 66 des Verfahrens 30 wird bevorzugt über den Lautsprecher 32 eine Handlungsanweisung und/oder ein Sicherheitshinweis als Sprachausgabe an die Person ausgegeben. Alternativ oder zusätzlich wird in dem zumindest einen, insbesondere weiteren, Verfahrensschritt 66 des Verfahrens 30 vorzugsweise über den Lautsprecher 32 eine Wegbeschreibung als Sprachausgabe an die Person ausgegeben. In zumindest einem, insbesondere weiteren, Verfahrensschritt 68 des Verfahrens 30 wird bevorzugt über die Steuer- und/oder Kommunikationsschnittstelleneinheit 16 in Abhängigkeit von der Authentifizierung auf eine, einem Fachmann bereits bekannte Art und Weise ein Steuersignal an die Schließvorrichtung der Türe 34 übertragen.

Das Verfahren 30 kann weitere, einem Fachmann als sinnvoll erscheinende Verfahrensschritte aufweisen. Auch eine Reihenfolge der Verfahrensschritte kann auf eine, einem Fachmann als sinnvoll erscheinende Art und Weise anders geartet sein, als hierin beschrieben wurde.

### Bezugszeichen

- 10: Zutrittskontrollsystem
- 12: Recheneinheit
- 14: akustische Ausgabeeinheit
- 16: Steuer- und/oder Kommunikationsschnittstelleneinheit
- 18: akustische Eingabeeinheit
- 20: Umgebungsüberwachungseinheit
- 22: externe Einheit
- 24: Hauptplatine
- 26: Nebenplatine
- 28: Haupterstreckungsebene
- 30: Verfahren
- 32: Lautsprecher
- 34: Tür
- 36: Summer
- 38: optische Ausgabeeinheit
- 40: Signalübertragungsanschluss
- 42: Speicherkartenslot
- 44: Mikrofon
- 46: Kamera
- 48: zusätzliche Recheneinheit
- 50: weitere Nebenplatine
- 52: Kameraöffnung
- 54: Funkwellenmodul
- 56: Verbindungselement
- 58: Signalverstärker
- 60: Verfahrensschritt
- 62: Verfahrensschritt
- 64: Verfahrensschritt
- 66: Verfahrensschritt
- 68: Verfahrensschritt

## Patentansprüche

1. Zutrittskontrollsystem mit zumindest einer Recheneinheit (12) zu einer elektronischen Datenverarbeitung, mit zumindest einer akustischen Ausgabeeinheit (14) und mit zumindest einer Steuer- und/oder Kommunikationsschnittstelleneinheit (16), über die die Ausgabeeinheit (14) mit der Recheneinheit (12) verbindbar ist, insbesondere verbunden ist, **dadurch gekennzeichnet, dass** die Recheneinheit (12) dazu eingerichtet ist, in Abhängigkeit von einer Authentifizierung einer Person eine situationsspezifische Information, insbesondere Anweisung, als Sprachausgabe mittels zumindest eines über die Steuer- und/oder Kommunikationsschnittstelleneinheit (16) verbundenen oder verbindbaren Lautsprechers (32), insbesondere der Ausgabeeinheit (14), auszugeben.

2. Zutrittskontrollsystem nach Anspruch 1, **dadurch gekennzeichnet, dass** die Recheneinheit (12) dazu eingerichtet ist, in Abhängigkeit von der Authentifizierung eine automatische Sprachauswahl für die Sprachausgabe durchzuführen.

3. Zutrittskontrollsystem nach Anspruch 1 oder 2, **gekennzeichnet durch** zumindest eine akustische Eingabeeinheit (18), insbesondere zumindest ein Mikrofon (44) umfassende akustische Eingabeeinheit (18), zu einer Spracheingabe, wobei die Recheneinheit (12) dazu eingerichtet ist, in Abhängigkeit von der Spracheingabe eine automatische Sprachauswahl für die Sprachausgabe durchzuführen.

4. Zutrittskontrollsystem nach einem der vorhergehenden Ansprüche, **gekennzeichnet durch** zumindest eine akustische Eingabeeinheit (18), insbesondere zumindest ein Mikrofon (44) umfassende akustische Eingabeeinheit (18), zu einer Spracheingabe, wobei die Recheneinheit (12) dazu eingerichtet ist, in Abhängigkeit von der Spracheingabe eine biometrische Spracherkennung für die Authentifizierung durchzuführen.

5. Zutrittskontrollsystem nach einem der vorhergehenden Ansprüche, **gekennzeichnet durch** zumindest eine Umgebungsüberwachungseinheit (20), insbesondere zumindest eine Kamera (46) umfassende Umgebungsüberwachungseinheit (20), zu einer Erfassung einer Annäherung einer Person, wobei in Abhängigkeit von der Erfassung der Annäherung mittels der Steuer- und/oder Kommunikationsschnittstelleneinheit (16), insbesondere mittels eines drahtlosen Kommunikationsmoduls der Steuer- und/oder Kommunikationsschnittstelleneinheit (16), ein automatischer Verbindungsaufbau zu einer externen Einheit (22), insbesondere Smartphone, startbar ist und/oder die situationsspezifische Information in Form der Sprachausgabe über den Lautsprecher (32) ausgebbar ist.

6. Zutrittskontrollsystem zumindest nach dem Oberbegriff des Anspruchs 1, insbesondere nach einem der vorhergehenden Ansprüche, **gekennzeichnet durch** zumindest eine elektronische Hauptplatine (24), auf der zumindest die Recheneinheit (12) angeordnet ist, und zumindest eine elektronische Nebenplatine (26), auf der zumindest die akustische Ausgabeeinheit (14) und/oder die Steuer- und/oder Kommunikationsschnittstelleneinheit (16) angeordnet ist, wobei die Nebenplatine (26), insbesondere lösbar, an der Hauptplatine (24) angeordnet ist, vorzugsweise in einer sich zumindest im Wesentlichen parallel zu einer Haupterstreckungsebene (28) der Hauptplatine (24) erstreckenden Ebene versetzt zur Hauptplatine (24) an der Hauptplatine (24) befestigt ist.

7. Verfahren zu einem Betrieb eines Zutrittskontrollsystems, insbesondere eines Zutrittskontrollsystems nach einem der vorhergehenden Ansprüche, **dadurch gekennzeichnet, dass** in Abhängigkeit von einer Authentifizierung einer Person eine situationsspezifische Information, insbesondere eine Anweisung, als Sprachausgabe mittels eines Lautsprechers (32), insbesondere einer akustischen Ausgabeeinheit (14) des Zutrittskontrollsystems, an die Person ausgegeben wird.

8. Verfahren nach Anspruch 7, **dadurch gekennzeichnet, dass** eine Recheneinheit (12) des Zutrittskontrollsystems in Abhängigkeit von der Authentifizierung eine automatische Sprachauswahl für die Sprachausgabe durchführt.

9. Verfahren nach Anspruch 7 oder 8, **dadurch gekennzeichnet, dass** eine Recheneinheit (12) des Zutrittskontrollsystems in Abhängigkeit von einer Spracheingabe über eine akustische Eingabeeinheit (18), insbesondere Mikrofon (44), des Zutrittskontrollsystems eine automatische Sprachauswahl für die Sprachausgabe durchführt.

10. Verfahren nach einem der Ansprüche 7 bis 9, **dadurch gekennzeichnet, dass** über den Lautsprecher (32) eine Handlungsanweisung und/oder ein Sicherheitshinweis als Sprachausgabe an die Person ausgegeben wird.

11. Verfahren nach einem der Ansprüche 7 bis 10, **dadurch gekennzeichnet, dass** über den Lautsprecher (32) eine Wegbeschreibung als Sprachausgabe an die Person ausgegeben wird.

12. Verfahren nach einem der Ansprüche 7 bis 11, **dadurch gekennzeichnet, dass** eine Recheneinheit (12) des Zutrittskontrollsystems in Abhängigkeit von einer Spracheingabe über eine akustische Eingabeeinheit (18), insbesondere Mikrofon (44), des Zutrittskontrollsystems eine biometrische Spracherkennung für die Authentifizierung durchführt.
